# FASCICULE DE BREVET EUROPEEN

(11) **EP 0 841 735 B1**
(45) Date de publication et mention de la délivrance du brevet: **16.02.2005**
(21) Numéro de dépôt: 97402584.3
(22) Date de dépôt: 30.10.1997
(51) Int. Cl.: H02K 5/20, H02K 9/19

(54) **Perfectionnements aux alternateurs du type refroidis par liquide**
Verbesserungen an flüssigkeitsgekühlten Generatoren
Improvements relating to liquig cooled alternators

(30) Priorité: 31.10.1996 FR 9613329
(43) Date de publication de la demande: 13.05.1998
(73) Titulaire: VALEO EQUIPEMENTS ELECTRIQUES MOTEUR, 94000 Créteil (FR)
(72) Inventeur: Armiroli, Paul, 94440 Marolles En Brie (FR)
(74) Mandataire: Le Forestier, Eric

(56) Documents cités:
- FR-A- 2 717 640
- GB-A- 2 217 923
- US-A- 4 864 974

## Description

La présente invention est relative aux alternateurs du type refroidis par liquide. Elle concerne également des paliers arrières pour de tels alternateurs, ainsi que des circuits de refroidissement de moteurs à combustion de véhicule automobile.

On sait qu'il est souhaitable de refroidir les alternateurs de véhicule automobile pour augmenter leurs performances et leur permettre de fonctionner dans des environnements correspondant à des températures élevées.

En dehors du refroidissement par air, une autre solution consiste à intégrer l'alternateur dans la boucle de refroidissement du moteur thermique, le corps de l'alternateur comportant au moins un passage de refroidissement dans lequel circule le liquide du circuit de refroidissement dudit moteur thermique.

Des alternateurs de ce type ont déjà été proposés.

On pourra a cet égard se référer aux demandes GB-A-2 217 923 et FR-A 2 717 640. Cette solution présente en outre l'avantage de permettre d'utiliser l'alternateur pour le chauffage du moteur thermique au démarrage du véhicule. On sait en effet que la mise en température d'un moteur thermique au démarrage du véhicule doit se faire aussi rapidement que possible, le degré de pollution et le bruit de fonctionnement étant sensiblement affectés par une température de fonctionnement trop basse, une mise en température rapide permettant également de disposer rapidement d'air chaud pour le chauffage de l'habitacle du véhicule.

Par ailleurs, il est également déjà connu d'utiliser un circuit servant au refroidissement à la fois du moteur et de l'alternateur, pour réchauffer un échangeur air-liquide destiné au chauffage de l'habitacle du véhicule.

Dans un tel circuit de refroidissement, on prévoit entre l'entrée et la sortie du circuit de refroidissement dans le corps de l'alternateur une dérivation qui permet, malgré la présence de l'alternateur dans le circuit de refroidissement, de conserver le débit d'eau nécessaire pour le radiateur de chauffage de l'habitacle, la pompe à eau étant dimensionnée en fonction de ce débit.

Généralement, cette dérivation est réalisée par un tuyau monté à l'extérieur de l'alternateur, ce qui pose des problèmes d'encombrement.

L'invention propose d'intégrer cette dérivation dans le corps de l'alternateur.

Plus précisément, l'invention propose un alternateur pour véhicule notamment automobile comportant un corps dans lequel est monté un stator, ainsi qu'un rotor solidaire d'un arbre monté rotatif sur des paliers que présente ledit corps, le corps comportant au moins un passage interne pour la circulation d'un liquide destiné à refroidir ledit alternateur, ledit passage étant destiné à être relié à un circuit de refroidissement d'un moteur à combustion d'un véhicule automobile qui traverse en outre un échangeur air-liquide destiné à chauffer l'habitacle du véhicule, ledit alternateur étant caractérisé en ce que son corps comporte entre l'entrée et la sortie du passage interne de refroidissement un deuxième passage interne du type destiné à dériver une partie du débit nécessaire à l'échangeur air-liquide.

Dans un premier mode de réalisation possible, le corps comporte une queue de raccordement dans laquelle sont ménagés un conduit d'entrée et un conduit de sortie destinés à relier le passage de refroidissement au circuit de refroidissement du moteur à combustion du véhicule, le passage de dérivation étant ménagé dans la queue de raccordement entre ledit conauit d'entrée et ledit conduit de sortie.

Dans un autre mode de réalisation avantageux, le passage de dérivation s'étend dans l'épaisseur d'un flasque que présente un des paliers du corps.

Notamment, le passage de dérivation s'étend sensiblement sur ledit flasque selon un anneau.

Avantageusement également, le corps comprend un palier arrière recevant le stator et le rotor, ainsi qu'un palier avant qui ferme le palier arrière, le passage de refroidissement et le passage de dérivation étant ménagés sur le palier arrière.

L'invention concerne également un palier arrière pour un tel alternateur, ainsi qu'un circuit de refroidissement comportant un tel alternateur, présentant les caractéristiques énoncées aux revendications 6 et 10. D'autres avantages de l'invention ressortiront encore de la description qui suit. Cette description est purement illustrative et non limitative. Elle doit être lue en regard des dessins annexés sur lesquels :
- la figure 1 est une représentation schématique d'un circuit de refroidissement dans lequel est intégré un alternateur conforme à un mode de réalisation possible pour l'invention ;
- la figure 2 est une vue en coupe d'un palier arrière d'alternateur conforme à une variante de réalisation possible de l'invention ;
- la figure 3 est une vue en coupe selon la ligne III-III de la figure 2 ;
- la figure 4 est une vue en coupe d'un palier arrière d'alternateur conforme à une autre variante de réalisation possible de l'invention ;
- la figure 5 est une vue en coupe selon la ligne V-V de la figure 4.

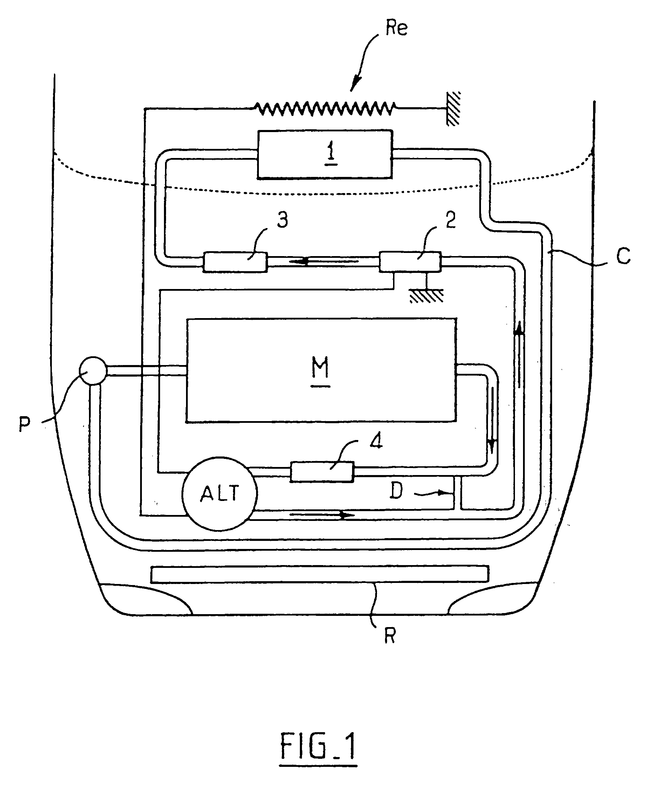

Le circuit de refroidissement C illustré sur la figure 1 sert à refroidir à la fois un bloc moteur M et un alternateur ALT entraîné par ce bloc moteur M. Il contribue en outre au chauffage de l'habitacle du véhicule automobile, le liquide de refroidissement alimentant en sortie du bloc moteur M et de l'alternateur ALT un échangeur air-liquide ou aérotherme 1.

Dans l'exemple illustré sur la figure 1, le bloc moteur M est en amont de l'alternateur ALT, qui est lui même en amont de l'aérotherme 1, le circuit de refroidissement C étant refermé entre l'aérotherme 1 et le bloc moteur M par l'intermédiaire d'une pompe P qui force la circulation du liquide de refroidissement dans ledit circuit. Le liquide de refroidissement est de l'eau.

Un radiateur de refroidissement R est prévu à l'avant du capot du véhicule, pour refroidir le liquide de refroidissement grâce à un flux d'air créé par la vitesse d'avancement du véhicule ou par un motoventilateur disposé au niveau dudit radiateur.

L'énergie calorifique prélevée lors du refroidissement du bloc moteur M et de l'alternateur ALT par le liquide de refroidissement est utilisée pour le chauffage de l'habitacle. En outre, lors du démarrage du véhicule, l'alternateur ALT contribue à la mise en température du bloc moteur M. Notamment, il peut être prévu dans la portion de circuit de refroidissement C intégrée à l'alternateur des éléments chauffants par effet Joule permettant d'accélérer la montée en température du liquide de refroidissement au démarrage du véhicule. Ces éléments chauffants sont par exemple alimentés par le courant en sortie de l'alternateur ALT.

En variante, et ainsi qu'illustré sur la figure 1, il est disposé entre d'une part le bloc moteur M et l'alternateur ALT et d'autre part l'aérotherme 1 un thermoplongeur 2 alimenté par l'alternateur ALT.

L'aérotherme 1 est par exemple disposé, avec d'autres moyens de chauffage, tels qu'une résistance électrique Re à coefficient de température positif alimentée par l'alternateur ALT qui dissipe par effet joule, au droit de la zone d'échange entre le circuit de refroidissement C et l'air de l'habitacle, dans une zone de chauffage des pieds à l'avant du véhicule.

Des régulateurs de débit 3 et 4 sont prévus en entrée de la portion du circuit de refroidissement C qui est intégrée à l'alternateur ALT, ainsi qu'en entrée de l'aérotherme 1. Ces régulateurs 3 et 4 permettent d'optimiser les débits d'une part pour le refroidissement de l'alternateur ALT et d'autre part pour le chauffage par l'aérotherme 2

Le débit nécessaire à travers l'aérotherme 1 étant plus important que le débit à travers l'alternateur ALT, il est prévu sur le circuit de refroidissement C une dérivation D entre l'entrée et la sortie de la portion dudit circuit dans le corps de l'alternateur ALT.

Conformément à l'invention, cette dérivation D est elle-même intégrée au corps de l'alternateur ALT.

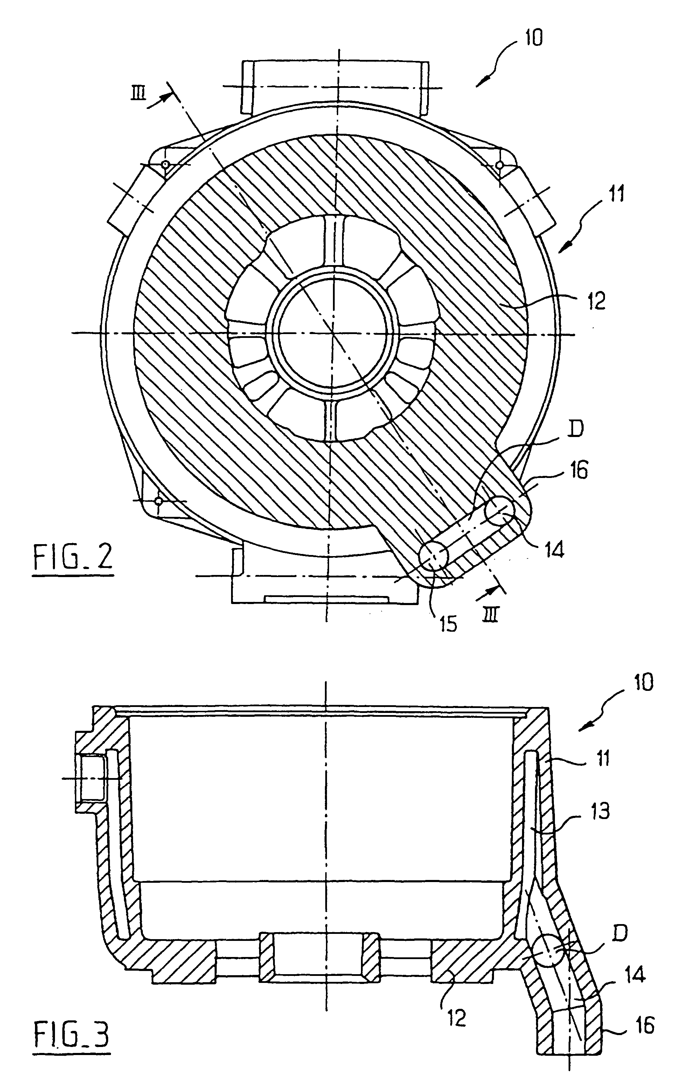

On a illustré sur les figures 2 et 3 un premier mode de réalisation possible pour cette dérivation.

Sur ces figures 2 et 3, on a illustré en vue en coupe un palier arrière 10 d'un alternateur conforme à ce mode de réalisation.

Ce palier arrière 10 comporte un corps 11 de forme principalement cylindrique, ainsi qu'un flasque 12 qui ferme ce corps 11 à une de ses extrémités. Ce palier arrière 10 définit avec un palier avant qui est destiné à le fermer et qui n'a pas été représenté sur les figures, le corps ou carter de l'alternateur. Les deux paliers portent l'arbre de l'alternateur. Le stator de l'alternateur est fixé à l'intérieur du palier arrière 10, tandis que le rotor est solidaire en rotation de l'arbre de l'alternateur.

Le circuit principal de refroidissement C de ce palier 10 est constitué par un passage 13 (figure 3) annulaire cylindrique ménagé dans l'épaisseur du corps 11, sur sensiblement tout le pourtour de celui-ci sans être refermé sur lui-même.

Ce passage 13 est relié au circuit de refroidissement C du moteur à combustion par l'intermédiaire de deux conduits tubulaires 14 et 15 juxtaposés - l'un d'entrée, l'autre de sortie - ménagés dans une queue de raccordement 16 qui s'étend sur le côté d'une zone du corps 11, au voisinage du flasque 12, ainsi qu'au-delà dudit flasque 12.

Ces deux conduits d'entrée et de sortie reçoivent des raccords (non représentés) pour la liaison dudit passage de refroidissement 13 au circuit de refroidissement C.

Le circuit de dérivation D est dans cette variante un passage tubulaire qui est ménagé dans la queue de raccordement 16 du palier 10 et qui relie les manchons d'entrée et de sortie 14 et 15, en entrée et en sortie du passage 13 de refroidissement de l'alternateur.

La longueur et le diamètre de ce passage de dérivation D sont calibrés pour optimiser le débit du liquide de refroidissement de l'alternateur dans le passage 13.

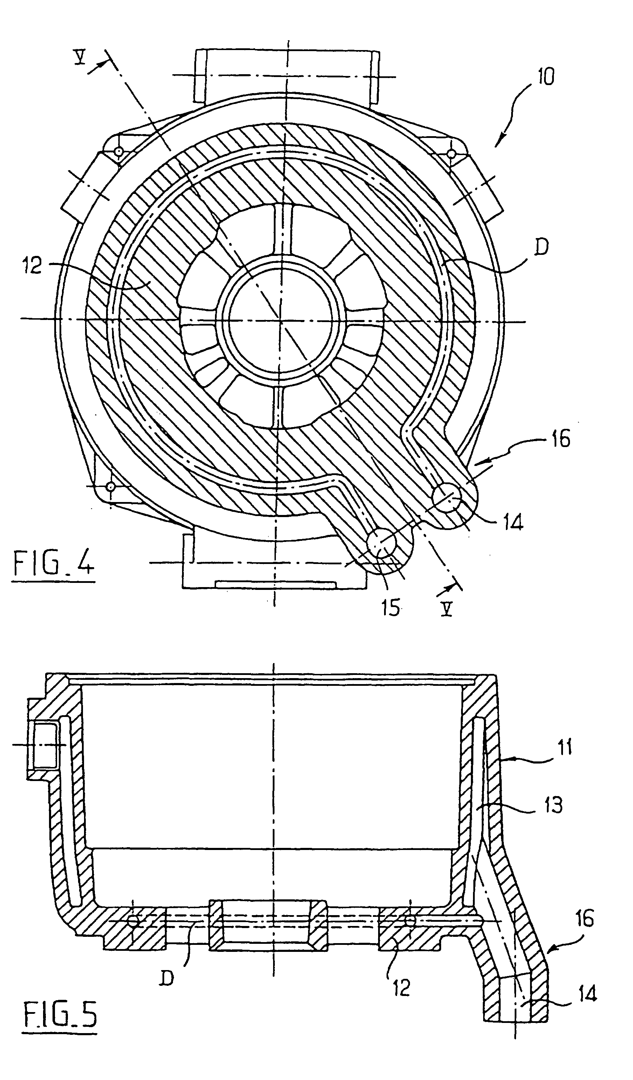

. Dans le mode de réalisation illustré sur les figures 4 et 5, le circuit de dérivation D est un conduit tubulaire de petit diamètre qui est ménagé dans l'épaisseur du palier arrière 10 et qui s'étend sur celui-ci selon un anneau centré sur l'axe du palier, entre le conduit d'entrée et le conduit de sortie 14 et 15 de la queue de raccordement 16.

Cette configuration est particulièrement avantageuse.

Le passage de dérivation annulaire D ménagé sur le flasque 12 contribue en effet au refroidissement des éléments d'électronique montés sur le flasque 12, par exemple au refroidissement des diodes du pont de redressement de l'alternateur ALT ou encore au refroidissement de l'électronique de commande des éléments chauffants intégrés audit alternateur ALT.

## Revendications

1. Alternateur pour véhicule notamment automobile comportant un corps (10) dans lequel est monté un stator, ainsi qu'un rotor solidaire d'un arbre monté rotatif sur des paliers que présente ledit corps (10), le corps (10) comportant au moins un passage interne (13) pour la circulation d'un liquide destiné à refroidir ledit alternateur (ALT), ledit passage (13) étant destiné à être relié à un circuit de refroidissement (C) d'un moteur à combustion (M) d'un véhicule automobile qui traverse en outre un échangeur air-liquide (1) destiné à chauffer l'habitacle du véhicule, ledit alternateur étant **caractérisé en ce que** son corps (10) comporte entre l'entrée et la sortie (14, 15) du passage interne de refroidissement (13) un deuxième passage interne (D) du type destiné à dériver une partie du débit nécessaire à l'échangeur air-liquide (1).

2. Alternateur selon la revendication 1, **caractérisé en ce que** le corps (la) comporte une queue de raccordement (16) dans laquelle sont ménagés un conduit d'entrée et un conduit de sortie (14, 15) destinés à relier le passage de refroidissement (13) au circuit de refroidissement (C) du moteur à combustion (M) du véhicule, le passage de dérivation (D) étant ménagé dans la queue de raccordement (16) entre ledit conduit d'entrée et ledit conduit de sortie (14, 15).

3. Alternateur selon la revendication 1, **caractérisé en ce que** le passage de dérivation (D) s'étend dans l'épaisseur d'un flasque que présente un (10) des paliers du corps.

4. Alternateur selon la revendication 3, **caractérisé en ce que** le passage de dérivation (D) s'étend sensiblement sur ledit flasque (12) selon un anneau.

5. Alternateur selon l'une des revendications précédentes, **caractérisé en ce** le corps comprend un palier arrière (10) recevant le stator et le rotor, ainsi qu'un palier avant qui ferme le palier arrière, le passage de refroidissement (13) et le passage de dérivation (D) étant ménagés sur le palier arrière (10).

6. Palier arrière pour un alternateur à refroidissement par liquide comportant un corps (11) destiné à recevoir le stator et le rotor de l'alternateur et un flasque (12) qui ferme ledit corps à une de ses extrémités, le corps comportant au moins un passage interne (13) pour la circulation d'un liquide destiné à refroidir ledit alternateur, ledit passage (13) étant destiné à être relié à un circuit de refroidissement (C) d'un moteur à combustion (M) d'un véhicule automobile qui comporte en outre un échangeur air-liquide (1) destiné à chauffer l'habitacle du véhicule, ledit palier (10) étant **caractérisé en ce qu'**il comporte entre l'entrée et la sortie (14, 15) du passage interne de refroidissement (13) un deuxième passage interne (D) du type destiné à dériver une partie du débit nécessaire à l'échangeur air-liquide (1).

7. Palier arrière selon la revendication 6, **caractérisé en ce qu'**il comporte une queue de raccordement (16) dans laquelle sont ménagés un conduit d'entrée et un conduit de sortie (14, 15) destinés à relier le passage de refroidissement (13) au circuit de refroidissement (C) du moteur à combustion (M) du véhicule, le passage de dérivation (D) étant ménagé dans la queue de raccordement (16) entre ledit conduit d'entrée et ledit conduit de sortie (14, 15).

8. Palier arrière selon la revendication 6. **caractérisé en ce que** le passage de dérivation (D) s'étend dans l'épaisseur du flasque (12).

9. Palier selon la revendication 8, **caractérisé en ce que** le passage de dérivation (D) s'étend sensiblement sur ledit flasque (12) selon un anneau.

10. Circuit de refroidissement (C) d'un moteur à combustion (M) d'un véhicule automobile qui traverse en outre un échangeur air-liquide (1) destiné à chauffer l'habitacle du véhicule, **caractérisé en ce qu'**il est relié à l'entrée et à la sortie (14, 15) d'un passage de refroidissement (13) et d'un passage de dérivation (D) d'un alternateur (ALT) selon l'une des revendications 1 à 5.

## Patentansprüche

1. Wechselstromgenerator für Fahrzeuge, insbesondere Kraftfahrzeuge, mit einem Körper (10), in dem ein Ständer sowie ein Läufer angebracht sind, der fest mit einer Welle verbunden ist, die drehbar auf Lagerschilden gelagert ist, die der besagte Körper (10) aufweist, wobei der Körper (10) wenigstens einen inneren Durchlaß (13) für die Zirkulation einer Flüssigkeit enthält, die zur Kühlung des besagten Wechselstromgenerators (ALT) bestimmt ist, wobei der besagte Durchlaß (13) dazu bestimmt ist, mit einem Kühlkreislauf (C) eines Verbrennungsmotors (M) eines Kraftfahrzeugs verbunden zu werden, der außerdem durch einen Luft-Flüssigkeits-Wärmetauscher (1) hindurchgeht, der dazu bestimmt ist, den Fahrgastraum des Fahrzeugs zu heizen, wobei der besagte Wechselstromgenerator **dadurch gekennzeichnet ist, daß** sein Körper (10) zwischen dem Einlaß und dem Auslaß (14, 15) des inneren Kühldurchlasses (13) einen zweiten inneren Durchlaß (D) enthält, der dazu bestimmt ist, einen Teil des Durchsatzes, der für den Luft-Flüssigkeits-Wärmetauscher (1) erforderlich ist, abzuzweigen.

2. Wechselstromgenerator nach Anspruch 1, **dadurch gekennzeichnet, daß** der Körper (14) ein Anschlußendstück (16) umfaßt, in dem ein Einlaßkanal und ein Auslaßkanal (14, 15) angeordnet sind, die dazu bestimmt sind, den Kühldurchlaß (13) mit dem Kühlkreislauf (C) des Verbrennungsmotors (M) des Fahrzeugs zu verbinden, wobei der Abzweigdurchlaß (D) in dem Anschlußendstück (16) zwischen dem besagten Einlaßkanal und dem besagten Auslaßkanal (14, 15) angeordnet ist.

3. Wechselstromgenerator nach Anspruch 1, **dadurch gekennzeichnet, daß** sich der Abzweigdurchlaß (D) in der Dicke eines Flansches erstreckt, den einer (10) der Lagerschilde des Körpers aufweist.

4. Wechselstromgenerator nach Anspruch 3, **dadurch gekennzeichnet, daß** sich der Abzweigdurchlaß (D) in etwa auf dem besagten Flansch (12) entlang einem Ring erstreckt.

5. Wechselstromgenerator nach einem der vorangehenden Ansprüche, **dadurch gekennzeichnet, daß** der Körper einen hinteren Lagerschild (10), der den Ständer und den Läufer aufnimmt, sowie einen vorderen Lagerschild umfaßt, der den hinteren Lagerschild verschließt, wobei der Kühldurchlaß (13) und der Abzweigdurchlaß (D) an dem hinteren Lagerschild (10) angeordnet sind.

6. Hinterer Lagerschild für einen flüssigkeitsgekühlten Wechselstromgenerator mit einem Körper (11), der dazu bestimmt ist, den Ständer und den Läufer des Wechselstromgenerators aufzunehmen, und mit einem Flansch (12) der den besagten Körper an einem seiner Enden verschließt, wobei der Körper wenigstens einen inneren Durchlaß (13) für die Zirkulation einer Flüssigkeit enthält, die zur Kühlung des besagten Wechselstromgenerators bestimmt ist, wobei der besagte Durchlaß (13) dazu bestimmt ist, mit einem Kühlkreislauf (C) eines Verbrennungsmotors (M) eines Kraftfahrzeugs verbunden zu werden, der außerdem einen Luft-Flüssigkeits-Wärmetauscher (1) umfaßt, der dazu bestimmt ist, den Fahrgastraum des Fahrzeugs zu heizen, wobei der besagte Lagerschild (10)
**dadurch gekennzeichnet ist, daß** er zwischen dem Einlaß und dem Auslaß (14, 15) des inneren Kühldurchlasses (13) einen zweiten inneren Durchlaß (C) enthält, der dazu bestimmt ist, einen Teil des Durchsatzes, der für den Luft-Flüssigkeits-Wärmetauscher (1) erforderlich ist, abzuzweigen.

7. Lagerschild nach Anspruch 6, **dadurch gekennzeichnet, daß** er ein Anschlußendstück (16) enthält, in dem ein Einlaßkanal und ein Auslaßkanal (14, 15) angeordnet sind, die dazu bestimmt sind, den Kühldurchlaß (13) mit dem Kühlkreislauf (C) des Verbrennungsmotors (M) des Fahrzeugs zu verbinden, wobei der Abzweigdurchlaß (D) in dem Anschlußendstück (16) zwischen dem besagten Einlaßkanal und dem besagten Auslaßkanal (14, 15) angeordnet ist.

8. Lagerschild nach Anspruch 6, **dadurch gekennzeichnet, daß** sich der Abzweigdurchlaß (D) in der Dicke des Flansches (12) erstreckt.

9. Lagerschild nach Anspruch 8, **dadurch gekennzeichnet, daß** sich der Abzweigdurchlaß (D) in etwa auf dem besagten Flansch (12) entlang einem Ring erstreckt.

10. Kühlkreislauf (C) eines Verbrennungsmotors (M) eines Kraftfahrzeugs, der außerdem durch einen Luft-Flüssigkeits-Wärmetauscher (1) hindurchgeht, der dazu bestimmt ist, den Fahrgastraum des Fahrzeugs zu heizen, **dadurch gekennzeichnet, daß** er mit dem Einlaß und mit dem Auslaß (14, 15) eines Kühldurchlasses (13) und eines Abzweigdurchlasses (D) eines Wechselstromgenerators (ALT) nach einem der Ansprüche 1 bis 5 verbunden ist.

## Claims

1. Alternator for a vehicle, in particular an automobile comprising a body (10) in which is mounted a stator, as well as a rotor attached solidly to a shaft mounted so that it rotates on bearings of the said body (10), the body (10) comprising at least one internal passage (13) for the circulation of a liquid designed to cool the said alternator (ALT), the said passage (13) being designed to be connected to a cooling circuit (C) of a combustion engine (M) of an automobile vehicle which passes through moreover an air-liquid exchanger (1) designed to heat the cockpit of the vehicle, the said alternator being **characterised in that** its body (10) comprises between the inlet and the outlet (14, 15) of the internal cooling passage (13) a second internal passage (D) of the type designed to deviate part of the flow necessary for the air -liquid exchanger (1).

2. Alternator of claim 1, **characterised in that** the body (1a) comprises a connector end (16) in which are housed an inlet and an outlet duct (14, 15) designed to connect the cooling passage (13) to the cooling circuit (C) of the combustion engine (M) of the vehicle, the deviation passage (D) being housed in the connector end (16) between the said inlet duct and the said outlet duct (14, 15).

3. Alternator of claim 1, **characterised in that** the deviation passage (D) extends in the thickness of a flange present on one of the body bearings (10);

4. Alternator of claim 3, **characterised in that** the deviation passage (D) extends in more or less a ring shape on the said flange (12).

5. Alternator of any of the previous claims, **characterised in that** the body comprises a rear bearing (10) receiving the stator and the rotor, as well as a front bearing which seals the rear bearing, the cooling passage (13) and the deviation passage (D) being housed on the rear bearing (10).

6. Rear bearing for a liquid cooled alternator comprising a body (11) designed to receive the stator and rotor of the alternator and a flange (12) which seals the said body at one of its ends, the body comprising at least one internal passage (13) for the circulation of a liquid intended to cool the said alternator, the said passage (13) being designed to be connected to a cooling circuit (C) of a combustion engine (M) of an automobile vehicle which moreover comprises an air - liquid exchanger (1) designed to heat the cockpit of the vehicle, the said bearing (10) being **characterised in that** it comprises between the inlet and the outlet (14, 15) of the internal cooling passage (13) a second internal passage (D), of the type designed to deviate part of the flow necessary for the air - liquid exchanger (1).

7. Rear bearing of claim 6, **characterised in that** it comprises a connector end (16) in which are housed an inlet and outlet duct (14, 15) designed to connect the cooling passage (13) to the cooling circuit (C) of the combustion engine (M) of the vehicle, the deviation passage being housed in the connector end (16) between the said inlet duct and the said outlet duct (14, 15).

8. Rear bearing of claim 6, **characterised in that** the deviation passage (D) runs in the thickness of the flange (12).

9. Bearing of claim 8, **characterised in that** the deviation passage (D) runs in more or less a ring shape on the said flange (12).

10. Cooling circuit (C) of a combustion engine (M) of an automobile vehicle which transverses moreover an air -liquid exchanger (1) designed to heat the cockpit of the vehicle, **characterised in that** it is connected to the inlet and outlet (14, 15) of a cooling passage (13) and a deviation passage (D) of an alternator (ALT) of any of claims 1 to 5.
